# EUROPÄISCHE PATENTANMELDUNG

(11) **EP 0 617 264 A1**
(43) Veröffentlichungstag der Anmeldung: **28.09.1994**
(21) Anmeldenummer: 94103759.0
(22) Anmeldetag: 11.03.1994
(51) Int. Cl.: G01K 13/08

(54) **Temperatur-Messanordnung**

(30) Priorität: 20.03.1993 DE 4309018
(71) Anmelder: BALZERS-PFEIFFER GmbH, D-35609 Asslar (DE)
(72) Erfinder: Iser, Werner, D-35578 Wetzlar (DE)

(57) **Zusammenfassung**

Die Erfindung beschreibt eine Anordnung zur berührungslosen Temperaturmessung an Rotoren. Die Messung beruht auf dem Abfall der Permeabilität von ferromagnetischen Materialien bei Überschreitung der Curie-Temperatur. Auf einem Rotor (1) werden ein oder mehrere Ringe (2) aus ferromagnetischem Material angebracht. Diese bilden mit auf dem Stator befestigten ferromagnetischen Teilen (3) einen magnetischen Kreis. Der magnetische Widerstand dieses Kreises wird gemessen und gilt als Anzeige für die Überschreitung einer bestimmten Temperatur des Rotors.

## Beschreibung

Die Erfindung betrifft eine Anordnung zur berührungslosen Temperaturmessung an Rotoren.

Die Messung von Temperaturen an sich bewegenden Objekten ist eine weit verbreitete Aufgabenstellung in der Technik. Wenn es sich bei den Objekten um Rotoren handelt, welche mit sehr hoher Drehzahl umlaufen, kommen nur berührungslose Meßmethoden in Frage. Zusätzliche Randbedingungen schränken die Anwendbarkeit bekannter Meßmethoden weiter ein. Eine solche zusätzliche Randbedingung kann z.B. der Betrieb unter Vakuum sein. Stellvertretend für viele Anwendungsfälle seien hier schnellrotierende mechanische Vakuumpumpen (z.B. Turbomolekularpumpen) und Zentrifugen genannt. Die Bedeutung der Temperaturmessung und Überwachung wird besonders am Beispiel der Turbomolekularpumpe deutlich, bei der für einen sicheren Betrieb bestimmte Rotortemperaturen nicht überschritten werden dürfen. Dafür ist eine exakte und reproduzierbare Temperaturüberwachung unabdingbar.

In vielen Bereichen der Technik werden zur kontaktlosen Temperaturmessung Pyrometer erfolgreich eingesetzt. Diese sind mit Sensoren ausgerüstet, welche die von einem Objekt ausgesandte Strahlung als Maß für dessen Temperatur ermitteln. Die von den Sensoren empfangene Strahlung hängt, außer von der Temperatur, auch sehr stark von der Strahlungszahl ab, die ihrerseits von der Oberflächenbeschaffenheit des emmitierenden Objektes abhängt. Da die Oberflächen im Laufe der Zeit, insbesondere beim Abpumpen von dampfförmigen Medien in der Vakuumtechnik Wandlungen unterworfen sind, z.B. durch Kondensation, Ablagerung von festen Partikeln oder auch durch chemische Reaktionen, treten Verfälschungen der Temperaturmessung auf, welche den sicheren Betrieb der Maschine stören können. In der Regel sind Strahlungssensoren auch nicht für den Einsatz im Vakuum geeignet, da sie entweder mit einer Gasfüllung versehen sind oder eine zu hohe Entgasungsrate aufweisen. Durch die zum Teil hohe Empfindlichkeit gegen energiereiche ionisierende Strahlung ist ihr Einsatz beschränkt. Die Abhängigkeit der Messung von der Gehäusetemperatur erfordert komplizierte Korrekturschaltungen. Weitere Fehlermöglichkeiten, welche sehr schwer zu erfassen sind, treten bei Alterung auf.

Elektronische Methoden zur berührungslosen Temperaturmesung sind sehr aufwendig und für extreme Anforderungen wie hohe Drehzahlen nicht geeignet.

Der Erfindung liegt die Aufgabe zugrunde, eine Einrichtung zur berührungslosen Erfassung von Temperaturen vorzustellen, welche mit einfachsten Mitteln exakte und reproduzierbare Ergebnisse liefert und die obenbeschriebenen Nachteile vermeidet.

Die Aufgabe wird durch die kennzeichnenden Merkmale des ersten Patentanspruches gelöst. Die Ansprüche 2 bis 5 stellen weitere Ausgestaltungsmöglichkeiten der Erfindung dar.

Grundsätzlich kann auf jedem bekannten Zusammenhang zwischen einer Stoffeigenschaft und der Temperatur eine Temperaturmessung begründet werden. Für die obenbeschriebenen Anwendungsfälle von sich schnelldrehenden Rotoren im Vakuum sind ferromagnetische Materialien besonders geeignet, deren Curiepunkt im zu messenden Temperaturintervall liegt. Insbesondere kann der Curiepunkt von Eisen-Nickel-Verbindungen durch Variation des Nickelgehaltes in einem weiten Temperaturbereich verschoben werden (Boll, R: Weichmagnetische Werkstoffe, Vakuumschmelze GmbH). Diese Materialien verlieren bei hoher Temperatur damit ihre ferromagnetischen Eigenschaften und werden paramagnetisch. Dies hat zur Folge, daß der magnetische Fluß in einem magnetischen Kreis, welcher dieses Material als Bestandteil hat, stark reduziert wird oder mit anderen Worten: Der magnetische Widerstand wird größer.

Durch den Einsatz von ferromagnetischen Materialien zur Temperaturüberwachung können die obengenannten Nachteile der pyrometrischen Temperaturüberwachung überwunden werden. In der DE-OS 23 41 354 wird eine Vorrichtung zur berührungslosen Temperaturanzeige von sich drehenden Maschinenteilen mit Hilfe von ferromagnetischen Materialien beschrieben. Dazu werden ferromagnetische Einsätze am Rotor angebracht. Durch einen Impulsgeber und -zähler kann die Temperatur der sich drehenden Teile überwacht werden. Eine solche Vorrichtung ist jedoch für Rotoren, welche mit sehr hoher Drehzahl umlaufen, ungeeignet, da die Festigkeit durch die ferromagnetischen Einsätze stark reduziert wird.

Erfindungsgemäß wird diese Schwierigkeit überwunden, indem auf dem Rotor ein ferromagnetischer Ring aufgebracht wird. Dieser kann z.B. durch Aufschrumpfen mit dem Rotor verbunden sein, wodurch eine hohe Festigkeit erreicht wird. Der ferromagnetische Ring bildet mit in Rotornähe angebrachten, weiteren ferromagnetischen Teilen, einen magnetischen Kreis. In einem Beispiel nach Anspruch 2 wird auf dessen Statorteile eine Spule gewickelt, die von einem Wechselstrom durchflossen wird. Die Induktivität der Anordnung ist abhängig von den Eigenschaften des magnetischen Kreises und somit auch von der Permeabilität des ferromagnetischen Ringes.

Bei Überschreiten der Curie-Temperatur fällt die Permeabilität des ferromagnetischen Materials ab, was sich in einer Änderung der Induktivität der Anordnung bemerkbar macht. Durch an sich bekannte elektronische Auswertmethoden kann diese Änderung gemessen werden. Dieses Verfahren erlaubt eine exakte und reproduzierbare Temperaturbestimmung, da die Curie-Temperatur eine konstante Materialeigenschaft ist. Durch den Einsatz verschiedener ferromagnetischer Materialien oder Legierungen mit unterschiedlichen Curie-Temperaturen können Temperaturbestimmungen über einen weiten Bereich vorgenommen werden.

Grundsätzlich können anstelle der Induktivitätsmessung auch andere Methoden angewandt werden, welche geeignet sind, Änderungen des Flusses in einem magnetischen Kreis zu registrieren. Dies wird anhand eines weiteren Ausführungsbeispiels gezeigt.

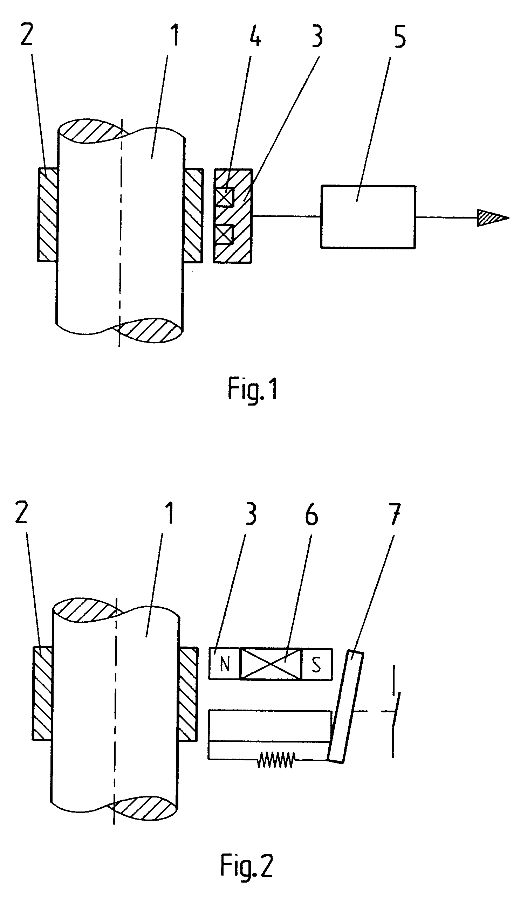

Die Erfindung wird durch die Figuren 1 und 2 näher erläutert.

Figur 1 zeigt das Schema einer Temperaturmessung mit einem induktiven Sensor.

Figur 2 zeigt das Schema einer Temperaturmessung mit einem passiven Sensor.

Auf einem Rotor 1 ist ein Ring 2 aus ferromagnetischem Material angebracht. Dem gegenüber befinden sich ferromagnetische Teile 3, welche an dem Stator befestigt sind und mit dem Ring 2 einen magnetischen Kreis bilden. An den mit dem Stator verbundenen ferromagnetischen Teilen sind Wicklungen 4 angebracht. Diese sind mit einer elektronischen Auswerteinrichtung 5 verbunden, welche die Induktivität der Anordnung mißt. Bei Überschreiten der Curie-Temperatur des ferromagnetischen Materials erfolgt eine Änderung der Induktivität, womit eine exakte und reproduzierbare Registrierung der Temperatur möglich ist.

Anstelle dieser Anordnung können, wie in Fig. 2 dargestellt, in den Statorteil des magnetischen Kreises Permanentmagnete 6 eingefügt werden. Ein Teil 7 des Joches des magnetischen Kreises wird nach Art eines elektromagnetischen Relais beweglich gestaltet. Damit entsteht ein Schaltkontakt, welcher bei Überschreiten der Curie-Temperatur und somit bei Änderung des magnetischen Flusses betätigt wird.

Zur Registrierung der Änderung des magnetischen Flusses kann auch ein Readkontakt oder ein anderes Bauteil, dessen Funktion auf dem Zusammenhang von magnetischem Fluß und einer physikalischen Größe beruht, in den magnetischen Kreis eingefügt werden.

Der ferromagnetische Ring 2 kann durch mehrere Ringe aus verschiedenen ferromagnetischen Materialien oder Legierungen mit unterschiedlichen Curie-Temperaturen ersetzt werden.

## Patentansprüche

1. Anordnung zur berührungslosen Temperaturbestimmung an Rotoren, dadurch gekennzeichnet, daß auf dem Rotor (1) ein ferromagnetischer Ring (2) mit im zu messenden Temperaturbereich veränderlicher Permeabilität angebracht ist, der mit am Stator befestigten ferromagnetischen Teilen (3) einen magnetischen Kreis bildet und daß Einrichtungen zur Messung des magnetischen Widerstandes dieses Kreises vorhanden sind.

2. Anordnung nach Anspruch 1, dadurch gekennzeichnet, daß an den mit dem Stator verbundenen ferromagnetischen Teilen (3) Wicklungen (4) angebracht sind, welche mit dem magnetischen Kreis eine Induktivität bilden, deren Wert durch den magnetischen Widerstand veränderlich ist und durch eine elektronische Auswerteinrichtung (5) gemessen werden kann.

3. Anordnung nach Anspruch 1, dadurch gekennzeichnet, daß im Statorteil des magnetischen Kreises Permanentmagnete (6) eingefügt sind, und ein Teil (7) des magnetischen Kreises nach Art eines elektromagnetischen Relais beweglich gestaltet ist, so daß ein Schaltkontakt entsteht, welcher bei Überschreiten einer bestimmten Rotortemperatur und damit einer Änderung des magnetischen Flusses betätigt wird.

4. Anordnung nach Anspruch 4, dadurch gekennzeichnet, daß anstelle eines Teiles des Joches ein Readkontakt verwendet wird.

5. Anordnung nach einem der Ansprüche 1 bis 4, dadurch gekennzeichnet, daß sich auf dem Rotor mehrere Ringe aus ferromagnetischen Materialien oder Legierungen mit unterschiedlichen Curie-Temperaturen befinden.
